# DEMANDE DE BREVET EUROPEEN

(11) **EP 2 299 139 A1**
(43) Date de publication de la demande: **23.03.2011**
(21) Numéro de dépôt: 10305739.4
(22) Date de dépôt: 06.07.2010
(51) Int. Cl.: F16D 23/04

(54) **Synchroniseur pour boîte de vitesse de véhicule automobile à inserts rapportés**

(30) Priorité: 09.09.2009 FR 0956134
(71) Demandeur: Renault s.a.s., 92100 Boulogne-Billancourt (FR)
(72) Inventeur: Garnier, Nicolas, 77680, ROISSY EN BRIE (FR)

(57) **Abrégé**

Le synchroniseur pour boîte de vitesses de véhicule automobile comprend un moyeu 14 destiné à être fixé sur un arbre de la boîte de vitesses, un pignon 12 destiné, à être monté à rotation sur ledit arbre, un baladeur 16 coulissant axialement sur le moyeu en direction du pignon, au moins un anneau de synchronisation 18, 20, 22 monté axialement entre le moyeu et le pignon, et un moyen de sollicitation axiale dudit anneau pourvu d'un organe de guidage mobile radialement relativement au moyeu et apte à coopérer avec au moins un chemin de glissement du baladeur. Le baladeur 16 comporte au moins un insert 50 rapporté sur lequel est ménagé le chemin de glissement.

## Description

La présente invention concerne le domaine général des boîtes de vitesses manuelles ou robotisées pour véhicule automobile.

Plus particulièrement, la présente invention concerne un synchroniseur pour boîte de vitesses de véhicule automobile à arbres parallèle et à engrenages.

Classiquement, un synchroniseur comporte un moyeu fixé sur un arbre de la boîte de vitesses et un baladeur coulissant axialement sur le moyeu en direction d'un ou plusieurs anneaux de synchronisation et d'un pignon monté fou à rotation sur l'arbre. Pour plus de détails sur la conception d'un tel synchroniseur, on pourra par exemple se référer aux demandes de brevet français 2 787 535 et 2 846 721 de la Demanderesse.

Dans une phase particulière de passage de vitesses, dite phase d'armement, on utilise des moyens permettant d'exercer temporairement un effort axial sur le ou les anneaux de synchronisation afin de conforme les cônes de ces anneaux tout en évacuant l'huile résiduelle pouvant s'être déposée sur celui-ci ou ceux-ci. Cette phase a pour but de préparer la phase suivante de passage de vitesses dite phase de synchronisation.

Les moyens prévus pour exercer cet effort axial sont des moyens du type a ressort aptes exercer un effort radial, montés dans le moyeu du synchroniseur et coopérant avec une rampe d'armement ménagée sur le baladeur.

Lors d'une phase suivante de passage de vitesses, dite phase de crabotage, pour faciliter le dévirage angulaire des crabots du pignon, il peut être nécessaire d'annuler l'effort axial persistant sur le ou les anneaux de synchronisation. On entend par « dévisage », la mise en rotation des crabots du pignon autour de l'arbre de la boîte de vitesses sous l'effet de la poussée axiale exercée par le baladeur.

Pour ce faire, une rampe de pente inverse à celle de la rampe d'armement est généralement ménagée afin d'obtenir un effort d'avalement agissant sur les moyens du type à ressort.

Classiquement, ces rampes d'avalement et d'armement sont obtenues par usinage du baladeur. Cette solution a pour inconvénient majeur d'être relativement onéreuse dans la mesure où il est nécessaire de prévoir des étapes de rectification sur les portions usinées du baladeur.

Par ailleurs, la maîtrise des tolérances géométriques de ces rampes est particulièrement difficile car la plupart de leurs arêtes et surfaces fonctionnelles résultent de plusieurs opérations d'usinage.

La présente invention a donc pour but de remédier à ces inconvénients.

Plus particulièrement, la présente invention vise à prévoir un synchroniseur pour boîte de vitesses de véhicule automobile facile à fabriquer et de conception économique.

Dans un mode de réalisation, le synchroniseur pour boîte de vitesses de véhicule automobile comprend un moyeu destiné à être fixé sur un arbre de la boîte de vitesses, un pignon destiné à être monté à rotation sur ledit arbre, un baladeur coulissant axialement sur le moyeu en direction du pignon, au moins un anneau de synchronisation monté axialement entre le moyeu et le pignon, et au moins un moyen de sollicitation axiale dudit anneau de synchronisation pourvu d'un organe de guidage qui est mobile radialement relativement au moyeu et apte à coopérer avec au moins un chemin de glissement prévu sur le baladeur. Le baladeur comporte au moins un insert rapporté sur lequel est ménagé le chemin de glissement.

Le chemin de glissement du baladeur coopère uniquement avec le moyen de sollicitation axiale de l'anneau de synchronisation.

Dans un mode de réalisation, la dimension axiale du ou des inserts est supérieure à celle de cannelures du baladeur prévues pour coopérer avec des dentures de l'anneau de synchronisation et du pignon. Le ou les inserts peuvent comporter des parties actives biseautées. Ces parties actives présentent avantageusement un profil différent de celui des cannelures du baladeur, qui peut par exemple être asymétrique.

Dans un mode de réalisation, le synchroniseur comprend trois moyens de sollicitation axiale de l'anneau de synchronisation coopérant avec trois inserts rapportés sur le baladeur. De préférence, les moyens de sollicitation axiale sont espacés de manière régulière les uns par rapport aux autres dans le sens circonférentiel.

Le ou les inserts peuvent être obtenus par frittage, ou par emboutissage à partir d'un flanc de tôle. Ils peuvent être montés sur le baladeur par complémentarité de forme.

Dans un mode de réalisation, l'organe de guidage comporte une bille sollicitée par un organe élastique apte à exercer un effort de poussée en direction du chemin de glissement.

La présente invention sera mieux comprise à l'étude d'un mode de réalisation pris à titre d'exemple nullement limitatif et illustré par les dessins annexés, sur lesquels :
- la figure 1 est une vue en perspective éclatée d'un synchroniseur pour boîte de vitesse selon un mode de réalisation de l'invention ; et
- les figures 2 et 3 sont respectivement des vues de détail en coupe et perspective d'un baladeur du synchroniseur de la figure 1.

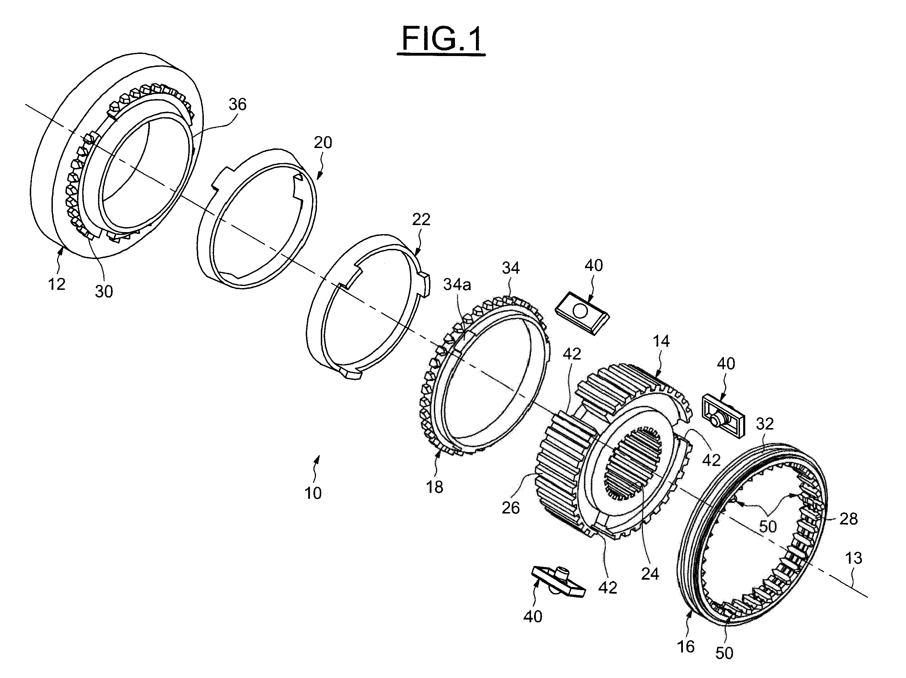

Sur la figure 1 est représenté en perspective éclatée un synchroniseur pour boîte de vitesses de véhicule automobile qui est désigné par la référence générale numérique 10.

Le synchroniseur 10 comprend principalement un pignon 12 monté fou à rotation sur un arbre de boîte de vitesses représenté schématiquement par son axe 13, un moyeu 14 fixé sur ledit arbre et un baladeur 16 coulissant axialement sur le moyeu 14 et entraîné en rotation par celui-ci.

Le synchroniseur 10 comporte également des moyens de couplage ou de synchronisation comportant un anneau supérieur 18, un anneau intermédiaire 20 de friction et un anneau inférieur 22 disposés axialement et radialement avec jeux entre le moyeu 14 et le pignon 12. Le baladeur 16 est prévu pour coulisser axialement sur le moyeu 14 en direction des moyens de synchronisation.

Dans le mode de réalisation illustré, le synchroniseur 10 est un synchroniseur du type double cône. Alternativement, il pourrait être possible sans sortir du cadre de la présente invention de prévoir un synchroniseur du type simple ou triple cône.

Le moyeu 14 comporte des cannelures 24 intérieures axiales prévues pour coopérer avec des cannelures complémentaires de l'arbre de boîte de vitesses pour transmettre un couple moteur, et des cannelures 26 extérieures axiales coopérant avec des cannelures 28 intérieures axiales complémentaires du baladeur 16 pour assurer son entraînement en rotation et permettre son coulissement axial sur la périphérie dudit moyeu.

Le pignon 12 comporte quant à lui une denture 30 axiale susceptible, lorsque le baladeur 16 est déplacé axialement en direction dudit pignon, d'être accouplée au moyeu 14 par l'intermédiaire dudit baladeur.

Le baladeur 16 est déplacé axialement par l'intermédiaire d'une fourchette (non représentée) et comporte à cet égard une gorge 32 annulaire prévue sur sa surface extérieure et présentant en section droite une forme générale en U.

De manière connue en soi, l'anneau 18 des moyens de synchronisation comporte sur sa périphérie extérieure une denture 34 extérieure prévue pour coopérer avec les cannelures 28 du baladeur 16, lorsque ledit baladeur est déplacé axialement en direction de l'anneau 18, de manière que l'anneau inférieur 22 entre en contact avec une portée 34 annulaire du pignon 12 pour entraîner ledit pignon. L'entraînement en rotation du pignon 12 s'effectue par l'intermédiaire de l'anneau 20 de friction à une vitesse de synchronisation égale à celle du moyeu 14.

Le moyeu 14 et le baladeur 16 comportent encore des moyens pour solliciter axialement les anneaux 18 à 22 de synchronisation lors de la phase d'armement de passage de vitesses précédant la phase de crabotage. A cet égard, des modules de billage 40 sont logés dans des encoches 42 ménagées sur la surface extérieure du moyeu 14 et séparant les cannelure 26 extérieures en tronçons de cannelures. Les modules de billage 40 sont ici au nombre de trois et répartis de manière régulière sur la circonférence du moyeu 14.

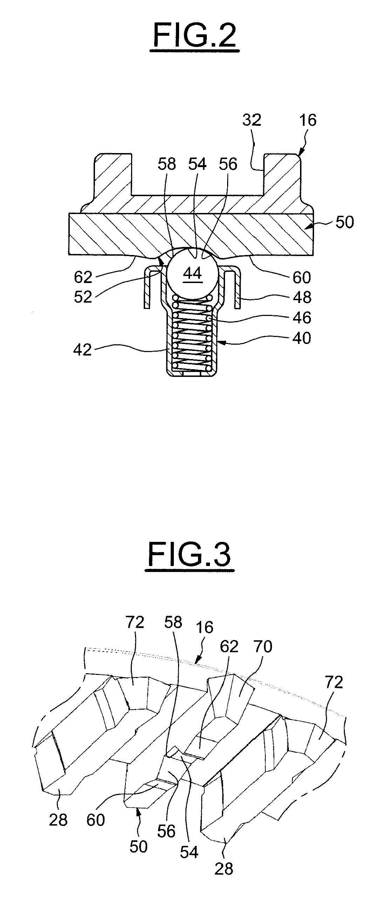

Comme illustré à la figure 2, chaque module de sillage 40 comporte un corps 42 qui s'étend selon une direction radiante perpendiculaire à l'axe 13 (figure 1) de l'arbre de la boîte de vitesse, une bille 44 en partie en saillie par rapport audit corps, et un organe élastique 46, tel qu'un ressort hélicoïdal, monté à l'intérieur du corps 42 et apte à exercer un effort radial de poussée sur la bille 44 en direction du baladeur 16. Le corps 42 comporte, à une extrémité supérieure, un rebord 48 périphérique entourant ledit corps et prévu pour venir axialement en appui contre des protubérances 34a de l'anneau 18 de synchronisation.

La bille 44 de chacun des modules 40 de billage coopère avec un insert 50 rapporté dans l'alésage du baladeur 16 entre deux cannelures 28 successives. Plus précisément, la surface inférieure de chaque insert 50 forme un chemin de roulement ou de glissement 52 pour la bille 44 du module de billage 40 associé s'étendant axialement en considérant l'axe 13 de l'arbre de boîte de vitesses. Chaque insert 50 est disposé radialement en regard du module de billage 40 associé. Les inserts 50 sont ici au nombre de trois.

Pour obtenir un passage de vitesses optimisé, chaque chemin de glissement 52 présente une géométrie adaptée spécifiquement à la phase d'armement du synchroniseur 10. Le chemin de glissement 52 comprend une gorge 54 concave orientée radialement vers le bas et à l'intérieur de laquelle est logée la bille 44 du module 40 de village lors de la phase d'armement. A partir du fond de la gorge 54 s'étendent de part et d'autres deux pentes 56, 58 d'amplification formant rampes d'armement en vue de la sollicitation axiale de l'anneau 18 de synchronisation. Chacune desdites pentes est prolongé par une pente 60, 62 d'avalement ou d'assistance. Les pentes 56, 58 et 60, 62 sont respectivement identiques entre elles. L'effort de poussée exercé par l'organe élastique 46 du module de billage 40 sur la pente du chemin de glissement 52 sur laquelle roule la bille 44 engendre une force de réaction de ladite pente sur la bille 44 qui est mobile radialement relativement au moyeu 14. Cette force de réaction dépend du tarage de l'organe élastique 40 et de la géométrie du chemin de roulement 52, et génère des efforts à vaincre ou des efforts d'assistance.

L'utilisation d'inserts 50 rapportés sur le baladeur 16 est particulièrement avantageuse car les chemins de roulement ou glissement 52 ménagées pour les billes 44 présentent une pluralité de rampes ou pentes.

En effet, lorsque les chemins de roulement associés aux modules de billage sont formés ou usinés directement sur le baladeur 16, la maîtrise des tolérances géométriques de ces chemins est particulièrement difficile car la plupart de leurs arêtes et surfaces fonctionnelles résultent de plusieurs opérations d'usinage délicates à réaliser dans l'alésage d'un baladeur de forme générale annulaire. Il peut donc être nécessaire de prévoir des opérations de rectification, ce qui accroît le coût de revient du synchroniseur.

Dès lors, la prévision d'inserts 50 rapportés permet la réalisation des chemins de glissement 52 sur des pièces distinctes du baladeur 16, ce qui facilite les opérations de fabrication tout en facilitant l'obtention des tolérances géométriques souhaitées. Après fabrication de leurs surfaces fonctionnelles, les inserts 50 sont ensuite rapportés sur le baladeur 16 de manière à former un ensemble unitaire pouvant être stocké, transporté, manipulé et monté sans risque de désolidarisation des éléments le constituant. Les inserts 50 peuvent être obtenus par frittage. Alternativement, il est également possible de réaliser les inserts 50 par découpe, pliage et emboutissage partir d'un flanc de tôle d'épaisseur mince. Bien entendu, les inserts 50 peuvent être obtenus par tout autre mode de fabrication, par exemple par usinage à partir d'une pièce brute.

La fixation des inserts 50 dans l'alésage du baladeur 16 en regard des modules 40 de billage peut être réalisé par tout moyen approprié, par exemple soudage, brasage, matage, ou encore par complémentarité de forme avec emmanchement. Dans ce dernier cas, il est possible de prévoir dans l'alésage du baladeur 16 des logements ayant une forme de queue d'aronde.

Comme illustré à la figure 3, les inserts 50 présentent une dimension axiale supérieure à celle des cannelures 28 du baladeur 16 de manière que des parties actives 70 desdits inserts soient axialement en avant de parties actives 72 desdits cannelures. Comme indiqué précédemment, les cannelures 28 du baladeur 16 sont destinées à coopérer avec la denture 34 de l'anneau supérieur 18 et des moyens de couplage ou de synchronisation. Les parties actives 70 des inserts 50 sont destinées à coopérer avec la denture 30 formée sur le pignon 12.

La réduction de la distance pouvant exister entre la denture 30 du pignon 12 et les parties actives 70 des inserts 50 du baladeur 16 permet de limiter les risques de désynchronisation entre ces deux pièces, et donc de chocs à l'engagement. En outre, les parties actives 70 sont chanfreinées asymétriquement par rapport à un plan radial de manière à être conjuguées avec les chanfreins de la denture 30 du pignon 12. Les parties actives 62 des cannelures 28 présentent quant à elle un profil symétrique par rapport à un plan radial.

Dans le mode de réalisation illustré, il est prévu trois modules de billage comportant chacun une bille sollicitée par un ressort hélicoïdal. Toutefois, on conçoit aisément qu'il est également possible, sans sortir du cadre de la présente invention, de modifier le nombre de module de billage et/ou remplacer ledit module par d'autres moyens permettant d'exercer temporairement un effort axial sur les moyens de synchronisation par renvoi angulaire, par exemple par un rouleau sollicité élastiquement par une lame en forme de fer à cheval, par une clavette associée à un jonc élastique, ou encore un jonc élastique seul.

## Revendications

1. Synchroniseur pour boîte de vitesses de véhicule automobile comprenant un moyeu (14) destiné à être fixé sur un arbre de la boîte de vitesses, un pignon (12) destiné à être monté à rotation sur ledit arbre, un baladeur (16) coulissant axialement sur le moyeu en direction du pignon, au moins un anneau de synchronisation (18, 20, 22) monté axialement entre le moyeu et le pignon, et au moins un moyen de sollicitation axiale dudit anneau pourvu d'un organe de guidage (44) mobile radialement relativement au moyeu et apte à coopérer avec au moins un chemin de glissement (52) du baladeur, **caractérisé en ce que** le baladeur (16) comporte au moins un insert (50) rapporté sur lequel est ménagé le chemin de glissement (52).

2. Synchroniseur selon la revendication 1, dans lequel le chemin de glissement (52) du baladeur coopère uniquement avec le moyen de sollicitation axiale de l'anneau de synchronisation.

3. Synchroniseur selon les revendications 1 ou 2, dans lequel la dimension axiale du ou des inserts (50) est supérieure à celle de cannelures (28) du baladeur prévues pour coopérer avec des dentures (30, 34) de l'anneau de synchronisation et du pignon.

4. Synchroniseur selon l'une quelconque des revendications précédentes, dans lequel le ou les inserts (50) du baladeur comportent des parties actives (70) biseautées.

5. Synchroniseur selon la revendication 4, dans lequel les parties actives (70) du ou des inserts présentent un profil différent de celui de cannelures (28) du baladeur.

6. Synchroniseur selon les revendications 4 ou 5, dans lequel les parties actives (70) du ou des inserts présentent un profil asymétrique.

7. Synchroniseur selon l'une quelconque des revendications précédentes, comprenant trois moyens de sollicitation axiale de l'anneau de synchronisation coopérant avec trois inserts (50) rapportés sur le baladeur.

8. Synchroniseur selon l'une quelconque des revendications précédentes, dans lequel le ou les inserts (50) du baladeur sont obtenus par frittage, ou par emboutissage à partir d'un flanc de tôle.

9. Synchroniseur selon l'une quelconque des revendications précédentes, dans lequel le ou les inserts (50) sont montés sur le baladeur (16) par complémentarité de forme.

10. Synchroniseur selon l'une quelconque des revendications précédentes, dans lequel l'organe de guidage (44) comporte une bille sollicitée par un organe élastique (46) apte à exercer un effort de poussée en direction du chemin de glissement (52).
